(19) **Europäisches Patentamt**
**European Patent Office**
**Office européen des brevets**

(11) **EP 2 329 972 B1**

(12) **EUROPEAN PATENT SPECIFICATION**

(45) Date of publication and mention
of the grant of the patent:
**29.03.2017 Bulletin 2017/13**

(51) Int Cl.:
***B60H 1/00*** *(2006.01)*

(21) Application number: **09175217.0**

(22) Date of filing: **06.11.2009**

(54) **HVAC system**

HVAC-System

Systèmes HVAC

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**08.06.2011 Bulletin 2011/23**

(73) Proprietor: **Volvo Car Corporation**
**405 31 Göteborg (SE)**

(72) Inventors:
• **Movert, Anders**
**41457, Göteborg (SE)**
• **Löfstrand, Hans**
**42355, Torslanda (SE)**
• **Rosqvist, Lars**
**41270, Göteborg (SE)**

• **Winter, Stefan**
**41324, Göteborg (SE)**
• **Harder, Andreas**
**41764, Göteborg (SE)**
• **Jange, Jonas**
**42933, Kullavik (SE)**

(74) Representative: **Volvo Car Corporation**
**405 31 Göteborg (SE)**

(56) References cited:
**EP-A- 1 116 612**     **WO-A-96/36504**
**DE-A1- 10 026 361**     **DE-A1-102005 048 910**
**US-A- 5 937 940**     **US-A- 6 118 099**
**US-A1- 2005 229 615**

**Description**

TECHNICAL FIELD

The invention relates to an HVAC system for a vehicle. The invention further relates to a method for controlling mean air discharge temperature, a method for predicting air discharge temperature and a use of temperature data.

BACKGROUND OF THE INVENTION

Modern vehicles have HVAC systems in order to provide comfort for the vehicle occupants. HVAC stands for heating, ventilation and air conditioning. The vehicle occupants may provide input to the system, for example by selecting direction of air flow and setting desired temperature levels. In order to measure and control the many variables that influence comfort, the HVAC systems have many sensors and control actuators.

Document US 5,937,940 discloses a method for predicting air discharge temperature from the air outlets of an HVAC system. One step in the method is to sense the temperature of the means for varying temperature, e.g. a heater core or an evaporator. As an example the temperature of the heater core is measured with a sensor tracking the engine coolant temperature, since this temperature is known to correlate with heater core temperature. The air flow is divided into two paths by a blend door. One path interacts with the heater core and the other passes by to subsequently rejoin and mix with the heated air.

The suggested indirect temperature measurement of US 5,937,940 makes the temperature measurement of the HVAC system dependent on systems outside the HVAC system, in the example above: the engine cooling system. The correlation between the engine coolant temperature and the heater core temperature and thereby eventually the prediction of the discharge temperature of the air outlet, will depend on the characteristics of the engine. If the engine is changed, new correlations need to be found.

Document DE10026361 discloses an HVAC system according to the preamble of appending claim 1.

When driving in cold climates, especially during winter time, the engine is rather cold at start-up and is therefore unable to supply enough heat to the air in the HVAC system. It is known to use an extra heater element, such as a PTC element (PTC = positive temperature coefficient) or a fuel-driven heater for the engine coolant, to supply heat when the engine is cold. Under such circumstances a prediction model for air discharge temperature also needs to take the heat supplied by the extra heater element into account.

It is further known to measure air discharge temperature in each outlet. Accurate temperature values may thereby be attained, but the disadvantage is that a high number of temperature sensors are needed, namely one for each outlet.

SUMMARY OF THE INVENTION

The object of the present invention is to overcome or ameliorate at least one of the disadvantages of the prior art, or to provide a useful alternative.

It is desirable to provide an HVAC system, the control of which is substantially independent of changes of the engine.

It is further desirable to provide an HVAC system comprising as few temperature sensors as possible for determining air discharge temperature in each outlet.

The object above may be achieved by the invention according to claim 1.

According to the present invention there is provided An HVAC system for a vehicle, said HVAC system comprising ducting, a heater element and at least one air outlet, the ducting is arranged so that an airstream passing through said HVAC system is split into a first airstream portion passing through said heater element and a second airstream portion by-passing said heater element, the ducting is further arranged so that an outlet airstream going through said at least one air outlet is a combination of air from said first and second airstream portions, said heater element comprising a heat exchanger and a PTC element. Further, a first temperature sensor is located downstream of said PTC element for determining the temperature in said first airstream portion, the first temperature sensor being located upstream of where said first and second airstream portions are combined.

Most HVAC systems in accordance with the invention comprise a plurality of air outlets, for example between 2 and 20 air outlets, preferably between 6 and 18, most preferably between 10 and 16. Often 12 or 14 air outlets are used.

The heater element may comprise one heater element, or may comprise two, three or more heater elements. Commonly two heater elements are used: a heat exchanger and an extra heater, e.g. a PTC element.

The suggested location of the first temperature sensor makes it possible to directly measure the temperature in the first airstream portion. According to known technology, this temperature has previously not been directly measured. By directly measured is meant that the temperature of the first airstream portion is measured in the airstream itself.

Known technology instead measures temperatures indirectly, for example by measuring the engine coolant temperature as mentioned in US 5,937,940.

Since the temperature measurement in the first airstream portion is measured directly and thereby inside the HVAC system, the measurement itself will not depend on factors outside the HVAC system, which would have been the case, if an indirect temperature measurement was performed. However, the temperature value itself is of course influenced by the heat exchanged with systems outside the HVAC system. The temperature measurement in the HVAC system according to the invention is thus independent of changes outside the HVAC system, for example if the HVAC system would be working together with another engine model.

Since the temperature is measured in the airstream downstream of the heater element, it does not matter in which way the heat energy is supplied, for example if the heat energy is coming from a heat exchanger or from an extra heater element or from a combination of both. It is enough to measure at one location as long as the location is downstream of the last heater element.

If the temperature in the first airstream portion and the temperature of the second airstream portion are known, it will be possible to use these temperatures, together with information about the proportions of air coming from the first and second airstream portions respectively, in order to predict the temperature at each outlet, as well as the mean temperature of all air outlets to a passenger compartment temperature zone. This saves cost as compared to measuring at each outlet individually.

A vehicle may have one, two, three, four, five or more passenger compartment temperature zones. It is common to use two zones in cars, one for the left side of the passenger compartment and one for the right side, which enables the driver and the front seat passenger to choose their own climate. In a large car, four zones may be used, in order to give the rear seat passenger a chance to choose their own climate. Larger vehicles, such as buses, may have a plurality of temperature zones. Normally, a plurality of air outlets leads air to a certain temperature zone.

According to the invention, the first temperature sensor is located upstream of the location where the first and second airstream portions are combined. Thereby the temperature is measured for the first airstream portion only, before the airstream has joined with the second airstream portion.

In an embodiment, the first temperature sensor is located directly downstream of the heater element. Located directly downstream means that there is no other element located between the first temperature sensor and the heater element. If more than one heater element is used, the first temperature sensor is preferably located directly downstream of the last heater element.

The location in the airstream of the first temperature sensor is preferably chosen, so that an accurate measurement can be made using as few temperature sensors as possible, preferably only one. Preferably, the sensor/s is/are located, such that the measured temperature/s are representative for the whole airstream portion.

A second temperature sensor may be used to measure the temperature of the second airstream portion. The second temperature sensor may be located in the by-pass or, as an alternative, upstream of where the airstream passing through the HVAC system is split into the first airstream portion passing through the heater element and the second airstream portion by-passing the heater element.

The heater element comprises a heat exchanger and a PTC element. Depending on driving situation and vehicle type, either the heat exchanger and/ or the PTC element may be active. For example, if driving in a cold winter climate, it will take a while before a fuel-driven engine gets warm and can provide heat to the heat exchanger. Therefore, most of the heat may come from the PTC element at start-up. Once the engine is warm, the heat from the PTC element can be reduced or turned off. A PTC element may also be useful in a hybrid vehicle, when the engine is electrically driven or for a completely electrical vehicle.

In an embodiment, the HVAC system further comprises an evaporator with the heater element located downstream of the evaporator. The ducting may be arranged to pass the whole airstream through the evaporator, and downstream of the evaporator split the whole airstream into the first airstream portion passing through the heater element and the second airstream portion by-passing the heater element.

Any of the above-mentioned HVAC systems may further comprise at least one control means, which is adapted to control the proportions of air coming from the first and second airstream portions in the outlet airstream going through the at least one air outlet. The control means can for example be flaps, blend doors or valves. They may be open or closed, or adjustable between open and closed.

In an embodiment, wherein the HVAC system has a plurality of air outlets, the airstream through each outlet may be individually adjustable, so that the proportions of air coming from the first airstream portion and the second airstream portion may be set individually for each individual air outlet. Purely as an example, a first outlet may have 20% air from the first airstream portion and 80% air from the second airstream portion, while another outlet may have 60% air from the first airstream portion and 40% air from the second airstream portion. The airflow, i.e. the amount of air passing each time unit, e.g. expressed as $m^3/h$, may be varied from outlet to outlet. In an embodiment, the flow through each outlet is controlled individually for each outlet. The driver may for example choose to have a high air flow to the floor region and/or to have a high air flow to the defroster. The driver's choices will thus influence how much air is flowing through each outlet. Further, it may be possible to set different desired temperature levels for the air outlets going to a certain passenger compartment temperature zone, e.g. the left-side outlets and the right-side outlets corresponding to air outlets directed at the driver and the front-seat passenger, respectively.

In a non-claimed embodiments there is provided a method for controlling mean air discharge temperature of air from an HVAC system of a vehicle which flows into a passenger compartment temperature zone. The HVAC system comprises ducting, a heater element and at least one air outlet. The method comprises the steps of:

- splitting an airstream passing through the HVAC system into a first airstream portion passing through the heater element and a second airstream portion by-passing the heater element,
- determining the temperature in the first airstream portion air downstream of the heater element,
- combining air from the first and second airstream portions upstream of the at least one air outlet, considering the temperatures of the respective airstreams, in proportions chosen to achieve a selectable desired air discharge temperature.

Mean air discharge temperature is defined as the mass-weighted average temperature value, with the average taken for the air flow discharged from the air outlets leading to a certain passenger compartment temperature zone.

The method may further comprise the step of determining the temperature of the air of the second airstream. This temperature may for example be measured in the by-pass of the heater element. If the HVAC systems comprises an evaporator, and the whole airstream passes the evaporator before being split into the first and second airstream portions, this temperature may instead be measured directly downstream of the evaporator, since the air there will have the same temperature as in the by-pass. As an alternative, the temperature may be measured somewhere else in the system and then used for calculating the temperature of the second airstream portion. The temperature may also be measured outside the HVAC system, e.g. for the entering air. However, in general it is preferred to measure the temperature of the air of the second airstream directly as suggested above.

If the HVAC system comprises a plurality of air outlets, the proportions of air coming from the first and second airstream portions in the individual outlet airstreams may be selectable for each outlet individually.

According to the present invention there is provided a method for predicting outlet air discharge temperature of air from an HVAC system of a vehicle, the HVAC system comprising ducting, a heater element and at least one air outlet, said heater element comprising a heat exchanger and a PTC element. The ducting is arranged so that an airstream passing through the HVAC system is split into a first airstream portion passing through the heater element and a second airstream portion by-passing the heater element. The ducting is further arranged so that an outlet airstream going through the at least one air outlet is a combination of air from the first and second airstream portions. The method comprises the steps of:

- determining the temperature in the first airstream portion downstream of said PTC element but upstream of where said first and second airstream portions are combined.
- determining the temperature of the second airstream portion,
- predicting the air discharge temperature as a function of the known temperatures of the first and second airstream portions and their proportions of the outlet airstream.

The predicted values may be used for climate control of the passenger compartment.

The method may be used to predict the air discharge temperature at an individual outlet. The method may also be used to predict the mean air discharge temperature to a passenger compartment temperature zone.

In this way, it is enough to know two temperatures in order to be able to predict the temperature at any outlet and/ or to any passenger compartment temperature zone. This saves cost as compared to measuring at each outlet individually.

The proportions in the outlet airstream of air from the first and second airstream portions may be determined from input data from control means parameters and/or flow distribution parameters. Examples of such parameters are: if flaps are open or closed, their degree of openness and fan speed.

In an embodiment, a relationship between proportions in the outlet airstream of air from the first and second airstream portions and the input data is used, which relationship has been empirically established. The relationship may for example be established by rig tests. Due to the high number of tests which normally are needed, which purely as an example may be over 10000, the rig tests are preferably automatized.

Each model variant of the HVAC system will have its own relationship, but once the relationship is established for a certain HVAC system, the relationship will be the same, even if there are changes made in the rest of the vehicle, e.g. another engine or powertrain, changes in the ventilation system and/or different passenger compartment models.

According to the present invention, there is provided a use of temperature data measured in a first airstream downstream of a PTC element of an HVAC system according to claim 1 for prediction of outlet air discharge temperature,

wherein said temperature data in said first airstream portion measured downstream of said PTC element of said HVAC system, but upstream of where said first and second airstream portions are combined, is combined with temperature data of said second airstream portion and knowledge about the proportions of air from said first and second airstream portions in order to predict said outlet air discharge temperature.

The use of the temperature data measured in the first airstream may be to predict the air discharge temperature at an individual outlet. The temperature data may also be used to predict the mean air discharge temperature to a passenger compartment temperature zone.

BRIEF DESCRIPTION OF THE DRAWINGS

The present invention will hereinafter be further explained by means of non-limiting examples with reference to the appended figures wherein:

Fig. 1     shows a schematic overview of an HVAC system according to prior art,

Fig. 2     shows a schematic cross-sectional view of the front part II of the HVAC system of Figure 1,

Fig. 3     shows a schematic cross-sectional view of the rear part III of the HVAC system of Figure 1,

Fig. 4     shows a schematic overview of a part of an HVAC system according to the invention.

DETAILED DESCRIPTION OF PREFERRED EMBODIMENTS

The invention will, in the following, be exemplified by embodiments. It should however be realized that the embodiments are included in order to explain principles of the invention and not to limit the scope of the appended claims. Details from two or more of the embodiments may be combined with each other.

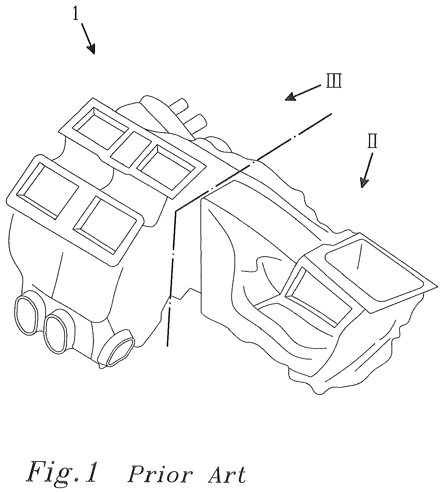

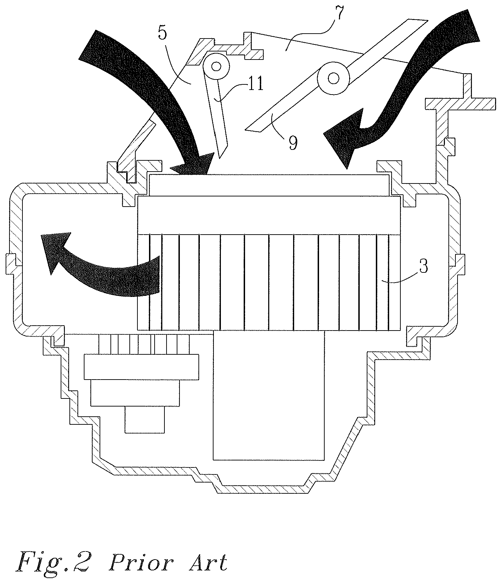

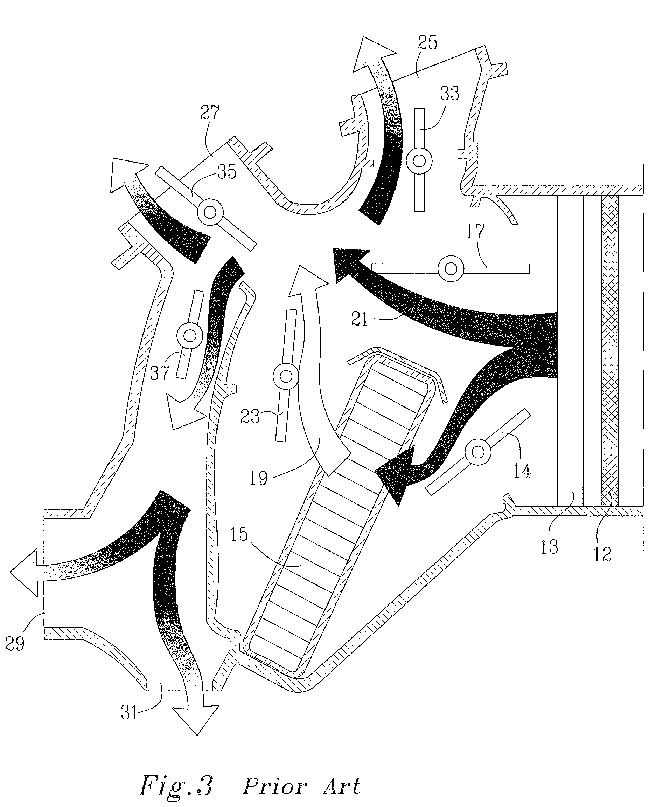

Figures 1-3 discloses schematically an HVAC system 1 according to prior art. Figure 1 shows an overview, while Figure 2 shows a schematic cross-sectional view of the front part II of the HVAC system 1 and Figure 3 shows a schematic cross-sectional view of the rear part III of the HVAC system 1. The illustrated HVAC system 1 is purely to be seen as an example. As seen in Figure 2, air is fed into the system by means of a fan 3. The air is taken from recycled air 5 and/or from the outside air 7. The air flows through the ducting of the HVAC system 1. The flow is controlled by means of control means, e.g. flaps, blend doors or valves. A first control means 9 regulates the flow of outside air while a second control means 11 regulates the flow of recycled air.

The air is moved forward in the ducting by the fan 3 and/or indirectly by the velocity of the vehicle. The air passes through a filter 12, schematically indicated in Figure 3. The air may further be cooled by an evaporator 13 of an air conditioning system. A third control means 14 regulates how much air passes through a heater element 15, while a fourth control means 17 regulates how much air is by-passing the heater element 15. The third 14 and fourth 17 control means thus split the airstream into a first portion 19 passing through the heater element 15 and a second portion 21 by-passing the heater element 15. The first airstream portion 19 may be heated to a predetermined temperature by the heater element 15. A fifth control means 23 regulates the air after the heater element 15.

Figure 3 further illustrates four air outlets: a defroster outlet 25, a ventilation outlet 27, a rear floor outlet 29 and a front floor outlet 31. Outside the figure, i.e. downstream in the flow direction, the air outlet may be branched into two, three, four or more outlets. The air outlets are associated with control means 33, 35, 37, which adjust the amount of air going through a certain air outlet. The airstream going through a certain air outlet is a combination of air from the first airstream portion 19 having passed the heater element 15 and from the second airstream portion 21 having by-passed the heater element 15. There may of course be more air outlets than the ones illustrated in this schematic view, which air outlets are in turn controlled by further control means. The number and localization of the control means, as well as the number and localization of the air outlets, are only to be seen as examples and may be varied.

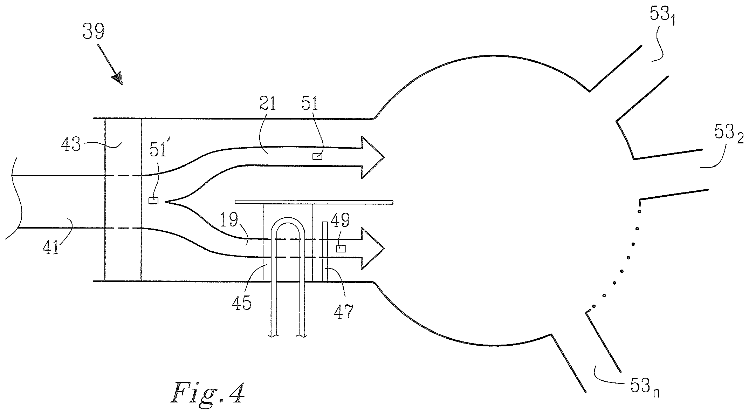

In Figure 4 a part 39 of an HVAC system 1 according to the invention is schematically illustrated. Only the part of the HVAC system disclosing the invention is shown. The other parts of the HVAC system 1 are according to existing technology, which is known by the man skilled in the art and will not be explained herein. Especially, the control means used for controlling the air flow are not illustrated.

Figure 4 illustrates a part of the ducting. The whole airstream flows 41 through the evaporator 43. The evaporator 43 is part of the air conditioning system. Depending on the setting of the air conditioning system, the air may be cooled by the evaporator 43 or not. If the outside air is not warm, as during winter-time, cooling is generally not desired. The airstream is then split by control means (not illustrated) into a first portion 19 passing through the heater element and a second portion 21 by-passing the heater element. The disclosed heater element in this case comprises two elements: a heat exchanger 45 and an extra element, e.g. a PTC element 47. The heat exchanger 45 exchanges heat by means of the engine coolant. The PTC element 47 is electrically driven and transforms electricity into heat. As an alternative (not illustrated) a fuel-driven heater may additionally heat the engine coolant. The extra element, i.e. the PTC element 47, and/or the fuel-driven heater is particularly useful when heated air is wanted and the engine is not delivering enough heat. This may be the case with an idle engine or just after the engine has started and the outside air is cold, e.g. driving in winter time, or when/if the vehicle is driven by electricity as occasionally in a hybrid vehicle or as in an electrical vehicle.

The temperature $T_h$ of the first air stream portion 19 is preferably measured after the PTC element 47 with a first temperature sensor 49. One or more temperature sensors may be used. To the surprise of the inventors, it was found that one sensor after the PTC element 47 may be enough to get a representative value for the temperature of the first air stream portion 19. The sensor may e.g. be a NTC sensor, NTC = negative temperature coefficient.

The temperature $T_e$ of the second airstream portion 21 may be measured in the by-pass by a second temperature sensor 51. Alternatively, the temperature may be measured after the evaporator 43, since the second airstream portion 21 will have the same temperature as the whole airstream 41 passing through the evaporator 43, illustrated as 51'.

Downstream of the heater elements 45, 47 and the by-pass, the first 19 and second airstream portions 21 are rejoined again and later on form airstreams through a number of air outlets $53_1$, $53_2$, ...$53_n$. Each outlet may have its own combination of air, given as the proportion $\alpha_i$ coming from the first airstream portion 19 and $(1-\alpha_i)$ coming from the second airstream portion 21 in the formulas below. The proportions for the airstream through each outlet are set by means of control means, e.g. flaps, blend doors and valves. The number of air outlets n may vary depending on the HVAC system, but n is often between 2 and 20, preferably between 6 and 18, most preferably between 10 and 16. Often an HVAC system with 12 or 14 air outlets is used.

The air outlet temperature $T_i$ through a certain outlet number i, can be calculated as:

$$T_i = \alpha_i T_h + (1-\alpha_i)T_e \tag{1}$$

where

| | |
|---|---|
| $T_i$ | temperature of airstream of outlet number i |
| $\alpha_i$ | proportion of the outlet airstream which has passed through the heater element |
| $(1-\alpha_i)$ | proportion of the outlet airstream which has by-passed the heater element |
| $T_h$ | temperature of first airstream portion passing through the heater element |
| $T_e$ | temperature of second airstream portion by-passing the heater element |
| i | the number of the air outlet, from 1 to the total number of air outlets n |

For each outlet $\alpha_I$, is a function of control means parameters and flow distribution parameters. The proportion $\alpha_i$ of the outlet airstream, which has passed through the heater element 15, thus depends on settings of the control means and the fan 3, for example how open a certain control means is and the speed of the fan 3.

For control of the climate in the passenger compartment it is further useful to have a mean model for the air outlets to a certain passenger compartment temperature zone. The example below discloses the case with two passenger compartment temperature zones: one for air outlets on the left side and one for air outlets on the right side of the vehicle. The left-side outlets may be directed towards driver and the right-side outlets towards the front seat passenger. Mean is the mass-weighted average value. Taken over all air outlets at the left side of the vehicle the relationship is:

$$T_{meanLeft} = \alpha_{meanLeft} T_h + (1-\alpha_{meanLeft})T_e \tag{2}$$

where

| | |
|---|---|
| $T_{meanLeft}$ | mass-weighted mean temperature out of the system for the left side |
| $\alpha_{meanLeft}$ | proportion of the outlet airstream passing through the heater element |
| $(1-\alpha_{meanLeft})$ | proportion of the outlet airstream by-passing the heater element |
| $T_h$ | temperature of first airstream portion passing through the heater element |
| $T_e$ | temperature of second airstream portion by-passing the heater element |

and the same for the right side:

$$T_{meanRight} = \alpha_{meanRight} T_h + (1 - \alpha_{meanRight}) T_e \qquad\qquad (3)$$

The $\alpha_{meanLeft}$ and $\alpha_{meanRight}$ are functions of parameters for the left and right temperature flaps, as well as the air flow and distribution. The total air flow through the air outlets on the left-hand side and one for outlets on the right-hand side, i.e. air exiting the HVAC system, sums up to the total air entering the system.

The relationship $\alpha_i$ as a function of control means parameters and flow distribution parameters for each outlet may be established empirically, e.g. by means of rig tests. The rig tests normally run through a high number of possible parameter combinations to find the $\alpha_i$-values. Due to the high number of tests which are needed, which purely as an example may be over 10000, the rig tests are preferably automatized.

In a similar way, also the relationships $\alpha_{meanLeft}$ and $\alpha_{meanRight}$ as a functions of control means parameters and flow distribution may be established empirically, e.g. by means of rig tests. If more passenger compartment temperature zones are used, $\alpha_{mean}$ may be established in a similar way for each zone. Each zone will then be associated with a formula similar to formulas (2) and (3).

Each model variant of the HVAC system will have its own relationship for the $\alpha$- values, $\alpha_i$, $\alpha_{meanLeft}$, $\alpha_{meanRight}$ etc, but once the relationship is established for a certain HVAC system, the relationship will be the same, even if there are changes made in the rest of the vehicle, e.g. another engine or powertrain, changes in the ventilation system and/or different passenger compartment models.

As seen above, the model according to formula (1) above makes use of directly measured parameters, that is the temperatures $T_h$ and $T_e$, which facilitates a better accuracy as compared to measuring indirect parameters, such as the temperature of the engine coolant of the heat exchanger 45 or the current through the PTC element 47. With the suggested location of the first temperature sensor 49, i.e. after the PTC element 47, it does not matter for the temperature measurement, if the heat is coming from the heat exchanger 45 or the PTC element 47.

Another advantage of the invention is that by using two measured temperatures $T_h$ and $T_e$, the temperature at each of the air outlets $53_1$, $53_2$, ...$53_n$ may be calculated. It is if course easier and cheaper to measure only two temperatures, as compared to measuring the temperature at each individual outlet $53_1$, $53_2$, ...$53_n$.

As the formula (1) above reveals, the temperature $T_e$ of the second airstream portion 21 may also be measured indirectly, by measuring the temperature after the first 19 and second airstream 21 portion have been rejoined, for example by measuring the temperature at outlet number x, $T_x$, and then calculate the temperature $T_e$ of the second airstream portion backwards from

$$T_e = (T_x - \alpha_x T_h)/(1 - \alpha_x) \qquad\qquad (4)$$

However, it is generally preferred to make a direct measurement of the temperature $T_e$ of the second airstream portion 21 in the bypass or downstream of the evaporator 43, as described above, since this generally gives more accurate values.

Further modifications of the invention within the scope of the appended claims are feasible. As such, the present invention should not be considered as limited by the embodiments and figures described herein. Rather, the full scope of the invention should be determined by the appended claims, with reference to the description and drawings.

**Claims**

1. An HVAC system (1) for a vehicle, said HVAC system (1) comprising ducting, a heater element and at least one air outlet ($53_1$, $53_2$, ...$53_n$), the ducting is arranged so that an airstream passing through said HVAC system is split into a first airstream portion (19) passing through said heater element and a second airstream portion (21) by-passing said heater element,
the ducting is further arranged so that an outlet airstream going through said at least one air outlet ($53_1$, $53_2$, ...$53_n$) is a combination of air from said first (19) and second (21) airstream portions,
said heater element comprising a heat exchanger (45) and a PTC element (47), **characterized in that**
a first temperature sensor (49) is located downstream of said PTC element (47) for determining the temperature in said first airstream portion (19), the first temperature sensor (49) being located upstream of where said first (19) and second (21) airstream portions are combined.

2. The HVAC system (1) according to claim 1 comprising a plurality of air outlets ($53_1$, $53_2$, ...$53_n$).

3. The HVAC system (1) according to any one of the previous claims, wherein the first temperature sensor (49) is located directly downstream of the PTC element (47).

4. The HVAC system (1) according to any one of the previous claims, wherein said HVAC system further comprises an evaporator (13, 43) and the heater element is located downstream of said evaporator (13, 43).

5. The HVAC system (1) according to claim 4, wherein the ducting is arranged to pass the whole airstream (41) through the evaporator (13, 43), and downstream of the evaporator (13, 43) split the whole airstream (41) into the first airstream portion (19) passing through the heater element and the second airstream portion (21) by-passing the heater element.

6. The HVAC system (1) according to any one of the previous claims, wherein the HVAC system (1) further comprises at least one control means (14, 17, 23), which is adapted to control the proportions of air coming from the first (19) and second (21) airstream portions in the outlet airstream going through said at least one air outlet ($53_1$, $53_2$, ...$53_n$).

7. The HVAC system (1) according to any one of the previous claims, wherein the HVAC system (1) has a plurality of air outlets ($53_1$, $53_2$, ...$53_n$), and the airstream through each outlet ($53_1$, $53_2$, ...$53_n$) may be individually adjustable, so that the proportions of air coming from the first airstream portion (19) and the second airstream portion (20) may be set individually for each individual air outlet ($53_1$, $53_2$, ...$53_n$).

8. The HVAC system (1) according to claim 4 or 5, or to claim 6 or 7 when dependent on claim 4, wherein the HVAC system (1) further comprises a second temperature sensor (51, 51') located in the second air stream portion (21) in the bypass of the evaporator (43) or in the whole airstream (41) located after the evaporator (43)

9. A method for predicting outlet air discharge temperature of air from an HVAC system (1) of a vehicle, said HVAC system (1) comprising ducting, a heater element and at least one air outlet ($53_1$, $53_2$, ...$53_n$), said heater element comprising a heat exchanger (45) and a PTC element (47), said ducting being arranged so that an airstream passing through said HVAC system (1) is split into a first airstream portion (19) passing through said heater element and a second airstream portion (21) by-passing said heater element,
said ducting further being arranged so that an outlet airstream going through said at least one air outlet ($53_1$, $53_2$, ...$53_n$) is a combination of air from said first (19) and second (21) airstream portions,
said method comprising the steps of

- determining the temperature in said first airstream portion (19) downstream of said PTC element (47) but upstream of where said first (19) and second (21) airstream portions are combined,
- determining the temperature of said second airstream portion (21),
- predicting said air discharge temperature as a function of said known temperatures of said first (19) and second (21) airstream portions and their proportions of said outlet airstream.

10. The method according to claim 9, wherein the proportions in the outlet airstream of air from said first (19) and second (21) airstream portions are determined from input data from control means parameters and/or flow distribution parameters.

11. The method according to claim 10, using a relationship between proportions in the outlet airstream of air from said first (19) and second (21) airstream portions and the input data, which relationship has been empirically established.

12. A use of temperature data measured in a first airstream downstream of a PTC element (47) of an HVAC system (1) according to claim 1 for prediction of outlet air discharge temperature,
wherein said temperature data in said first airstream portion (19) measured downstream of said PTC element (47) of said HVAC system (1), but upstream of where said first (19) and second (21) airstream portions are combined, is combined with temperature data of said second airstream portion (21) and knowledge about the proportions of air from said first (19) and second (21) airstream portions in order to predict said outlet air discharge temperature.

13. The use according to claim 12 for prediction of mean outlet air discharge temperature for the left and right temperature zones of the vehicle, wherein said temperature data in said first airstream portion (19) measured downstream of said PTC element (47) of said HVAC system (1) is combined with temperature data of said second airstream portion (21) and knowledge about the proportions of air from said first (19) and second (21) airstream portions going to the left and right temperature zones in order to predict said mean outlet air discharge temperature.

**Patentansprüche**

1. HVAC-System (1) für ein Fahrzeug, wobei das HVAC-System (1) Leitungsführungen, ein Heizelement und mindestens einen Luftauslass ($53_1$, $53_2$, ... $53_n$) umfasst, wobei die Leitungsführung derart angeordnet ist, dass ein Luftstrom, der durch das HVAC-System läuft, in einen ersten Luftstromanteil (19), der durch das Heizelement läuft, und einen zweiten Luftstromanteil (21), der das Heizelement umgeht, aufteilt, wobei die Leitungsführung ferner derart angeordnet ist, dass ein Auslassluftstrom, der durch mindestens einen Luftauslass ($53_1$, $53_2$, ... $53_n$) geht, eine Kombination aus Luft aus dem ersten (19) und zweiten (21) Luftstromanteil ist, wobei das Heizelement einen Wärmetauscher (45) und ein PTC-Element (47) umfasst, **dadurch gekennzeichnet, dass** ein erster Temperatursensor (49) stromabwärts des PTC-Elements (47) zum Bestimmen der Temperatur in dem ersten Luftstromabschnitt (19) angeordnet ist, wobei der erste Temperatursensor (49) stromaufwärts davon angeordnet ist und wo der erste (19) und zweite (21) Luftstromanteil kombiniert werden.

2. HVAC-System (1) nach Anspruch 1, umfassend mehrere Luftauslässe ($53_1$, $53_2$, ... $53_n$).

3. HVAC-System (1) nach einem der vorhergehenden Ansprüche, wobei der erste Temperatursensor (49) unmittelbar stromabwärts des PTC-Elements (47) angeordnet ist.

4. HVAC-System (1) nach einem der vorhergehenden Ansprüche, wobei das HVAC-System ferner einen Verdampfer (13, 43) umfasst und das Heizelement stromabwärts des Verdampfers (13, 43) angeordnet ist.

5. HVAC-System (1) nach Anspruch 4, wobei die Leitungsführungen derart angeordnet sind, um den gesamten Luftstrom (41) durch den Verdampfer (13, 43) laufen zu lassen und stromabwärts des Verdampfers (13, 43) den gesamten Luftstrom (41) in den ersten Luftstromanteil (19), der durch das Heizelement strömt, und den zweiten Luftstromanteil (21), der das Heizelement umgeht, zu teilen.

6. HVAC-System (1) nach einem der vorhergehenden Ansprüche, wobei das HVAC-System (1) ferner mindestens ein Steuermittel (14, 17, 23) umfasst, das ausgelegt ist, um die Luftproportionen zu steuern, die aus dem ersten (19) und zweiten (21) Luftstromanteil in dem Auslassluftstrom kommen, der durch den mindestens einen Luftauslass ($53_1$, $53_2$, ... $53_n$) geht.

7. HVAC-System (1) nach einem der vorhergehenden Ansprüche, wobei das HVAC-System (1) mehrere Luftauslässe ($53_1$, $53_2$, ... $53_n$) aufweist und der Luftstrom durch jeden Auslass ($53_1$, $53_2$, ... $53_n$) einzeln einstellbar sein kann, sodass die Luftproportionen, die von dem ersten Luftstromanteil (19) und dem zweiten Luftstromanteil (20) kommen, einzeln für jeden einzelnen Luftauslass ($53_1$, $53_2$, ... $53_n$) eingestellt werden können.

8. HVAC-System (1) nach Anspruch 4 oder 5, oder Anspruch 6 oder 7, wenn abhängig von Anspruch 4, wobei das HVAC-System (1) ferner einen zweiten Temperatursensor (51, 51') umfasst, der im zweiten Luftstromabschnitt (21) in der Umgehung des Verdampfers (43) angeordnet ist oder im gesamten Luftstrom (41), der nach dem Verdampfer (43) angeordnet ist.

9. Verfahren zum Vorhersagen der Auslassluft-Abgabetemperatur von Luft aus einem HVAC-System (1) eines Fahrzeugs, wobei das HVAC-System (1) Leitungsführungen, ein Heizelement und mindestens einen Luftauslass ($53_1$, $53_2$, ... $53_n$) umfasst, wobei das Heizelement einen Wärmetauscher (45) und ein PTC-Element (47) umfasst, wobei die Leitungsführung derart angeordnet ist, dass ein Luftstrom, der durch das HVAC-System (1) läuft, in einen ersten Luftstromanteil (19), der durch das Heizelement läuft, und einen zweiten Luftstromanteil (21), der das Heizelement umgeht, geteilt wird, wobei die Leitungsführung ferner derart angeordnet ist, dass ein Auslassluftstrom, der durch mindestens einen Luftauslass ($53_1$, $53_2$, ... $53_n$) strömt, eine Kombination aus Luft aus dem ersten (19) und zweiten (21) Luftstromanteil ist, wobei das Verfahren die Schritte umfasst:

   - Bestimmen der Temperatur in dem ersten Luftstromanteil (19) stromabwärts des PTC-Elements (47), aber stromaufwärts davon, wo der erste (19) und zweite (21) Luftstromanteil kombiniert werden,
   - Bestimmen der Temperatur des zweiten Luftstromanteils (21),
   - Vorhersagen der Luftabgabetemperatur in Abhängigkeit von den bekannten Temperaturen des ersten (19) und zweiten (21) Luftstromanteils und der Proportionen des Auslassluftstroms.

**10.** Verfahren nach Anspruch 9, wobei die Proportionen im Auslassluftstrom von Luft aus dem ersten (19) und zweiten (21) Luftstromanteil aus den Eingabedaten von Steuermittelparametern und/oder Flussverteilungsparametern bestimmt werden.

**11.** Verfahren nach Anspruch 10, unter Verwendung einer Beziehung zwischen Proportionen im Auslassluftstrom von Luft aus dem ersten (19) und zweiten (21) Luftstromanteil und den Eingabedaten, wobei die Beziehung empirisch hergestellt wurde.

**12.** Verwendung von Temperaturdaten, die in einem ersten Luftstrom stromabwärts eines PTC-Elements (47) eines HVAC-Systems (1) nach Anspruch 1 zur Vorhersage der Auslassluft-Abgabetemperatur gemessen werden, wobei die Temperaturdaten in dem ersten Luftstromanteil (19), die stromabwärts des PTC-Elements (47) des HVAC-Systems (1), aber stromaufwärts davon, wo der erste (19) und zweite (21) Luftstromanteil kombiniert werden, gemessen werden, mit Temperaturdaten des zweiten Luftstromanteils (21) und Kenntnissen über die Luftproportionen aus dem ersten (19) und zweiten (21) Luftstromanteil zum Vorhersagen der Auslassluft-Abgabetemperatur kombiniert werden.

**13.** Verwendung nach Anspruch 12 zur Vorhersage der mittleren Auslassluft-Abgabetemperatur für die linke und rechte Temperaturzone eines Fahrzeugs, wobei die Temperaturdaten in dem ersten Luftstromanteil (19), die stromabwärts des PTC-Elements (47) des HVAC-Systems (1) gemessen werden, mit Temperaturdaten des zweiten Luftstromabschnitts (21) und Kenntnissen der Luftproportionen aus den ersten (19) und zweiten (21) Luftstromanteilen, die zu linken und rechten Temperaturzonen gehen, um die mittlere Auslassluft-Abgabetemperatur vorherzusagen, kombiniert werden.

**Revendications**

**1.** Système HVAC (1) pour un véhicule, ledit système HVAC (1) comprenant des canalisations, un élément de chauffage et au moins une sortie d'air ($53_1$, $53_2$, ..., $53_n$), les canalisations étant agencées de telle sorte qu'un écoulement d'air passant à travers ledit système HVAC soit divisé en une première partie d'écoulement d'air (19) qui passe à travers ledit élément de chauffage et une seconde partie d'écoulement d'air (21) qui contourne ledit élément de chauffage,
les canalisations étant en outre agencées de telle sorte qu'un écoulement d'air de sortie qui passe à travers ladite au moins une sortie d'air ($53_1$, $53_2$, ..., $53_n$) soit une combinaison d'air issu desdites première (19) et seconde (21) parties d'écoulement d'air,
ledit élément de chauffage comprenant un échangeur de chaleur (45) et un élément PTC (47),
**caractérisé en ce qu'**un premier capteur de température (49) est situé en aval dudit élément PTC (47) afin de déterminer la température dans ladite première partie d'écoulement d'air (19), le premier capteur de température (49) étant situé en amont de l'endroit où lesdites première (19) et seconde (21) parties d'écoulement d'air sont combinées.

**2.** Système HVAC (1) selon la revendication 1, comprenant une pluralité de sorties d'air ($53_1$, $53_2$, ..., $53_n$).

**3.** Système HVAC (1) selon l'une quelconque des revendications précédentes, dans lequel le premier capteur de température (49) est situé directement en aval de l'élément PTC (47).

**4.** Système HVAC (1) selon l'une quelconque des revendications précédentes, dans lequel ledit système HVAC comprend en outre un évaporateur (13, 43) et l'élément de chauffage est situé en aval dudit évaporateur (13, 43).

**5.** Système HVAC (1) selon la revendication 4, dans lequel les canalisations sont agencées de manière à faire passer la totalité de l'écoulement d'air (41) à travers l'évaporateur (13, 43) et, en aval de l'évaporateur (13, 43), à diviser l'écoulement d'air global (41) en la première partie d'écoulement d'air (19) qui passe à travers l'élément de chauffage et la seconde partie d'écoulement d'air (21) qui contourne l'élément de chauffage.

**6.** Système HVAC (1) selon l'une quelconque des revendications précédentes, dans lequel le système HVAC (1) comprend en outre au moins un moyen de commande (14, 17, 23) qui est apte à commander les proportions de l'air entrant issu des première (19) et seconde (21) parties d'écoulement d'air dans l'écoulement d'air de sortie qui passe à travers ladite au moins une sortie d'air ($53_1$, $53_2$, ..., $53_n$).

**7.** Système HVAC (1) selon l'une quelconque des revendications précédentes, dans lequel le système HVAC (1) comprend une pluralité de sorties d'air ($53_1$, $53_2$, ..., $53_n$), et l'écoulement d'air qui passe à travers chaque sortie ($53_1$, $53_2$, ..., $53_n$) peut être réglé de façon individuelle, de telle sorte que les proportions de l'air entrant issu des première (19) et seconde (20) parties d'écoulement d'air puissent être réglées individuellement pour chaque sortie d'air individuelle ($53_1$, $53_2$, ..., $53_n$).

**8.** Système HVAC (1) selon la revendication 4 ou 5, ou la revendication 6 ou 7 lorsqu'elle dépend de la revendication 4, dans lequel le système HVAC (1) comprend en outre un second capteur de température (51, 51') qui est situé dans la seconde partie d'écoulement d'air (21) dans la dérivation de l'évaporateur (43) ou dans l'écoulement d'air global (41) situé après l'évaporateur (43).

**9.** Procédé pour prédire la température de décharge d'air de sortie de l'air provenant d'un système HVAC (1) d'un véhicule, ledit système HVAC (1) comprenant des canalisations, un élément de chauffage et au moins une sortie d'air ($53_1$, $53_2$, ..., $53_n$), ledit élément de chauffage comprenant un échangeur de chaleur (45) et un élément PTC (47), lesdites canalisations étant agencées de telle sorte qu'un écoulement d'air passant à travers ledit système HVAC (1) soit divisé en une première partie d'écoulement d'air (19) qui passe à travers ledit élément de chauffage et une seconde partie d'écoulement d'air (21) qui contourne ledit élément de chauffage,
lesdites canalisations étant en outre agencées de telle sorte qu'un écoulement d'air de sortie qui passe à travers ladite au moins une sortie d'air ($53_1$, $53_2$, ..., $53_n$) soit une combinaison d'air en provenance desdites première (19) et seconde (21) parties d'écoulement d'air,
ledit procédé comprenant les étapes suivantes:

- déterminer la température dans ladite première partie d'écoulement d'air (19) en aval dudit élément PTC (47) mais en amont de l'endroit où lesdites première (19) et seconde (21) parties d'écoulement d'air sont combinées,
- déterminer la température de ladite seconde partie d'écoulement d'air (21), et
- prédire ladite température de décharge d'air en fonction desdites températures connues desdites première (19) et seconde (21) parties d'écoulement d'air et de leurs proportions dans ledit écoulement d'air de sortie.

**10.** Procédé selon la revendication 9, dans lequel les proportions dans l'écoulement d'air de sortie desdites première (19) et seconde (21) parties d'écoulement d'air sont déterminées à partir de données d'entrée provenant de paramètres de moyens de commande et/ou de paramètres de distribution d'écoulement.

**11.** Procédé selon la revendication 10, qui utilise une relation entre des proportions dans l'écoulement d'air de sortie desdites première (19) et seconde (21) parties d'écoulement d'air et les données d'entrée, ladite relation ayant été établie de façon empirique.

**12.** Utilisation de données de température mesurées dans un premier écoulement d'air en aval d'un élément PTC (47) d'un système HVAC (1) selon la revendication 1 pour prédire une température de décharge d'air de sortie, dans laquelle lesdites données de température dans ladite première partie d'écoulement d'air (19) mesurées en aval dudit élément PTC (47) dudit système HVAC (1), mais en amont de l'endroit où lesdites première (19) et seconde (21) parties d'écoulement d'air sont combinées, sont combinées avec des données de température de ladite seconde partie d'écoulement d'air (21) et la connaissance des proportions d'air desdites première (19) et seconde (21) parties d'écoulement d'air dans le but de prédire ladite température de décharge d'air de sortie.

**13.** Utilisation selon la revendication 12 pour prédire une température de décharge d'air de sortie moyenne pour les zones de température gauche et droite du véhicule, dans laquelle lesdites données de température dans ladite première partie d'écoulement d'air (19) mesurées en aval dudit élément PTC (47) dudit système HVAC (1) sont combinées avec des données de température de ladite seconde partie d'écoulement d'air (21) et la connaissance des proportions d'air desdites première (19) et seconde (21) parties d'écoulement d'air se dirigeant vers les zones de température gauche et droite dans le but de prédire ladite température de décharge d'air de sortie moyenne.

*Fig.1   Prior  Art*

*Fig.2 Prior Art*

Fig.4

*Fig.3  Prior  Art*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5937940 A

- DE 10026361